# EUROPEAN PATENT APPLICATION

(11) **EP 3 418 432 A1**
(43) Date of publication of application: **26.12.2018**
(21) Application number: 17190533.4
(22) Date of filing: 12.09.2017
(51) Int. Cl.: D01F 1/10, A01K 61/00, D03D 15/00

(54) **DRAG AND BIOFOULING GROWTH REDUCING FABRIC FOR AQUACULTURE**

(30) Priority: 21.06.2017 IN 201721021755
(71) Applicant: Garware-Wall Ropes Limited, 411019 Pune Maharashtra (IN)
(72) Inventor: RAUT, Sanjay Vasudeo, 411045 Pune (IN); GUNARI, Nikhil, 411008 Pune (IN)
(74) Representative: TL Brand & Co

(57) **Abstract**

The present invention describes a fabric comprising a fabric that is woven using mismatched denier yarns in the warp and weft directions. The yarns used for the fabrication of the fabric maybe extruded with antifouling and/or foul release additives. The fabric is used at aquaculture farms to reduce drag and biofouling growth, while blocking harmful pests, parasites, insects, organisms, and animals from entering into the cage/farm. The fabric can also be used for filtering out harmful pests, parasites, insects, organisms, and animals and preventing them from going back into the water.

## Description

### FIELD OF THE INVENTION:

The present invention relates to a fabric installed at an aquaculture farm below the waterline that reduces drag by allowing water exchange as well as reduces biofouling growth, while blocking harmful organisms, parasites and animals from entering into the cage.

### BACKGROUND OF THE INVENTION:

Marine Aquaculture is one of the fastest growing industries in the food sector and contributes significantly to the national economy of many countries. Globally commercial marine aquaculture has evolved into one of the most developed sectors in the food industry over the last decade.

However marine aquaculture is plagued by sea lice infestation, diseases, harsh environmental conditions and predators leading to heavy losses.

Sea lice are small parasitic crustaceans that feed on the skin and mucous of Salmon. Sea lice levels are a health indicator and high parasite levels can have negative impact on the growth of the fish that affects the price of the fish. There are around 560 species in 37 genera, including approximately 162 Lepeophtheirus and 268 Caligus species. Lepeophtheirus salmonis and various Caligus species are adapted to saltwater and are major ectoparasites of farmed and wild Atlantic salmon.

Lepeophtheirus salmonis has become a major parasite in Norway, Scotland and Canada while Caligus Rogercresseyi has become a major parasite in Chile. It is still not completely known, how planktonic stages of sea lice disperse and find new hosts. Sea lice survival depends majorly on salinity and other factors such as light, temperature and currents. Sea lice need salinity greater than 25 parts per thousand (ppt) to survive.

Sea lice treatment methods in salmon farms include medicated feed, medicated bath treatments, natural predators, and mechanical barriers.

Till date medications such as Emamectin Benzoate and Ivermectin that are administered to the salmon through feed have been known to be most effective way of treating lice, in terms of lice efficacy and ease of operations during treatment. Bath treatments are more difficult and need more manpower to administer the drug. Bath treatments require tarpaulins, well boats, or skirts to contain the drug, so operationally a more challenging treatment method.

Bath treatments using Hydrogen Peroxide, Azamethiphos, Pyrethroids (Cypermethrin and Deltamethrin) are commonly used in salmon farms to control sea lice numbers. Hydrogen Peroxide is considered to be a "green" way of treating sea lice, but this treatment method suffers from various drawbacks such as, limited efficacy, high mortality, and growing resistance to the treatment.

Natural predators such as Cleaner Fish, have shown promise in controlling lice number in salmon farms in a natural way with no use of medications. Experiments on Cleaner Fish such as Wrasse fish and Lumpfish are being carried out in Norway and Canada. Wrasse fish seem to show promise in the smolt stage of salmon. Another challenge using just Cleaner Fish is that they also feed on the biofouling accumulating on the nets, which is easily available, thus reducing the efficacy against the delousing and thus increased the lice infested salmon.

The life cycle of salmon lice consists of free swimming stages and parasitic stages, where they are already attached to the host fish. Sea lice larvae are known to swim at a depth range of 0-10 meters. The lice larvae show an upward swimming behaviour.

More recently a new method to control sea lice infestation in salmon farms is being used, which consists of mechanically blocking the lice from entering the cage. Lice "Skirts" or "Shields" are installed around the cage at depths ranging from 5-10 meters.

This method of controlling sea lice numbers has a major advantage that lice may not develop resistance to the "treatment" method and can be used to control all stages of the sea lice. Lice skirt can reduce horizontal flow components significantly inside a cage, which is related to a reduction of water exchange.

Shielding skirts have a major advantage in controlling sea lice numbers being a non-pharmaceutical method, however, the reduced water exchange is a disadvantage.

Furthermore strong water currents cause drag resulting in lift up of the shielding skirt thereby allowing sea lice larvae to enter into the cage. Few hundred lice larvae entering into the cage due to the water currents can result in huge losses.

Further, biofouling quickly grows on the Shielding skirt which further reduces water exchange and increases the drag thus resulting in further lift up of the shielding skirts above the desired depths.

Moreover, frequent cleaning of the shielding skirts will cause damage to the fabric leading to defects in the Shielding skirt. There is every possibility that the Lice larvae can enter into the cage through these defects.

Antifouling paints can be applied on the Shielding skirt to prevent fouling, however this will block the water exchange completely.

In the light of the foregoing, there is a need in the art to provide a fabric that not only reduces the drag but also reduces the fouling on the shielding skirts.

Therefore, it is an object of the present invention to provide a fabric that prevents growth of fouling organisms and also reduces drag by allowing water to flow through the fabric. Drag reduction will reduce the lift up of the fabric thus maximizing the retention of depth of the fabric and hence reducing the number of harmful parasites, pests, insects, organisms and jelly fish entering into the aquaculture cage.

### SUMMARY OF THE INVENTION:

Before the present methods, systems, and hardware enablement are described, it is to be understood that this invention is not limited to the particular systems, and methodologies described, as there can be multiple possible embodiments of the present invention which are not explicitly illustrated in the present disclosure. It is also to be understood that the terminology used in the description is for the purpose of describing the particular versions or embodiments only, and is not intended to limit the scope of the present invention.

In accordance with the above objective, the present invention discloses a fabric that reduces drag and biofouling while blocking ectoparasites, micro & macro algae, jelly fish and other harmful micro & macro species from entering into the cage.

In an aspect the fabric is a coated or uncoated woven fabric made of mismatching denier yarns in the WARP and WEFT directions.

In another aspect the yarn in the WARP direction can be a) monofilament and yarn in the WEFT direction can be multifilament or vice-a-versa; b) monofilament yarn in the WARP direction and monofilament in the WEFT direction; or c) multifilament yarn in the WARP direction and multifilament in the WEFT direction.

In another aspect an antifouling and/or foul release additive is incorporated into the yarns during the extrusion process/yarn preparation.

In yet another aspect, an antifouling additive is incorporated in the extrusion of the yarn.

In further aspect of the present invention the fabric is a woven fabric with the mismatched denier yarn with or without the antifouling and foul release additive incorporated in the yarn.

In a specific embodiment of the invention, the fabric is made of 50% hydrophobic yarn and 50% Hydrophilic yarn.

In a specific embodiment of the invention, an additive is incorporated into the hydrophobic yarn to increase the specific gravity.

In a specific embodiment of the invention, one or more antifouling and/or one or more foul release additives are incorporated into the yarn during the extrusion process.

### DETAILED DESCRIPTION OF THE INVENTION:

Some embodiments of this invention, illustrating all its features, will now be discussed in detail.

The words "comprising," and "containing," and other forms thereof, are intended to be equivalent in meaning and be open ended in that an item or items following any one of these words is not meant to be an exhaustive listing of such item or items, or meant to be limited to only the listed item or items.

It must also be noted that as used herein, the singular forms "a," "an," and "the" include plural references unless the context clearly dictates otherwise. Although any systems and methods similar or equivalent to those described herein can be used in the practice or testing of embodiments of the present invention, the preferred, systems and methods are now described.

The phrase "Mismatched denier yarn" as used herein refers to the difference in denier between the WARP and WEFT yarns in the fabric and difference being 20 and higher. In a preferred embodiment, 500 denier yarn is taken in the WARP direction and 1000 denier yarn in the WEFT direction.

The disclosed embodiments are merely exemplary of the invention, which may be embodied in various forms.

In a preferred embodiment, a strong, lightweight, flexible fabric is described that reduces the drag by allowing increased water exchange through the fabric and also reducing the fouling on the fabric while blocking the harmful pests, parasites, insects, organisms, and animals from entering into the cage/farm. The fabric can also be used for filtering out harmful pests, parasites, insects, organisms, and animals and preventing them from going back into the water.

Accordingly, the fabric for reducing drag comprising a fabric having Mismatch of deniers of the WARP and WEFT yarns, wherein the fabric optionally includes at least one of:
a) An antifouling additive incorporated in the yarns during extrusion;
b) A foul release additive incorporated in the yarns during extrusion; and
c) An additive to increase specific gravity of the yarns.

In accordance with above embodiment, the fabric for reducing drag may be coated or uncoated.

According to the invention, the difference in denier between the WARP and WEFT yarns in the fabric is at least 20.

The antifouling additive is selected from the group consisting of ultrafine copper, copper nickel, cuprous oxide, cupric oxide, zinc oxide, boron powders, copper pyrithione, zinc pyrithione, triphenylborane-pyridine, and/or any compound that inhibits the growth of biofouling species.

The foul release additive is selected from the group consisting of ultrafine molybdenum disulphide, graphite, and/or any compound that reduces the coefficient of friction of the yarn.

The additive to increase specific gravity of the yarns is selected from the group consisting of calcium carbonate, barium sulfate, lead, tungsten, and/or any compound that has a specific gravity more than 1 gm/cm3.

In a preferred embodiment, the fabric is made up of mismatched denier yarn in the warp and weft directions.

In a preferred embodiment, the fabric is made up of monofilament yarns in the weft direction and multifilament yarn in the warp direction or vice-a-versa. While the multifilament yarn can be selected from the group consisting of polyester, nylon, polypropylene, or mix of any hydrophilic and hydrophobic yarns; the monofilament yarn can be selected from the group consisting of high density polyethylene, ultra-high molecular weight polyethylene, polypropylene, polyester, nylon, or mix of any hydrophilic and hydrophobic yarns.

In a preferred embodiment, the multifilament yarn is twisted using two-for-one method with a twist of greater than 30 twists per meter.

In a preferred embodiment, the fabric is made up of 50% hydrophobic yarn and 50% hydrophilic yarn.

In one preferred embodiment, the hydrophobic yarn is high density polyethylene (HDPE) and the hydrophilic yarn is polyester.

In one preferred embodiment, the fabric is made up of 500 denier HDPE monofilament yarn and 1000 denier Polyester multifilament yarn.

In a preferred embodiment, an additive is incorporated to increase the specific gravity of the hydrophobic yarn.

In a preferred embodiment, an antifouling and foul release additive are incorporated into the extrusion process of the yarn.

In one specific embodiment, the 500 denier yarn is extruded with 3% ultrafine copper powder, 5% cuprous oxide and 1% Molybdenum disulphide.

In one specific embodiment, the 500 denier HDPE yarn with copper, cuprous oxide and molybdenum disulphide incorporated in the yarn is taken in the WEFT direction and 1000 denier polyester multifilament yarn is WARP direction.

In one specific embodiment, the 1000 denier polyester yarn is processed by two-for-one twisting method using 150 turns per meter.

In a specific embodiment, the fabric is a fabric woven using greater than 15 ends per inch (EPI) and greater than 15 picks per inch (PPI).

In an optional embodiment, the fabric can be woven using 0-100% of the yarns that have an antifouling additive and/or foul release and/or specific gravity increasing additive incorporated in the yarn.

The fabric according to the invention, can be woven using plain weave, twill weave, ripstop weave or any other weave. In a preferred embodiment, the fabric is woven using twill weave.

The fabric according to invention can be installed around a single aquaculture cage or a full farm site for blocking harmful pests, parasites, insects, organisms, and animals from entering into the cage/farm.

The fabric according to the invention can be installed around a single aquaculture cage or a full farm site for filtering out harmful pests, parasites, insects, organisms, and animals and preventing them from going back into the water.

The following examples, which include preferred embodiments, will serve to illustrate the practice of this invention, it being understood that the particulars shown are by way of example and for purpose of illustrative discussion of preferred embodiments of the invention.

### Example

### Example 1

500 denier high density polyethylene (HDPE) monofilament yarn (hydrophobic) and 1000 denier polyester multifilament yarn (hydrophilic) were used to fabricate the fabric. HDPE yarn having tenacity 8.5 grams per denier was used in the warp direction and polyester yarn with tenacity 8.5 grams per denier was used in the weft direction for weaving. The fabric was fabricated using plain weave with 36 ends per inch and 36 picks per inch.

### Example 2

Modified 500 denier high density polyethylene (HDPE) monofilament yarn was extruded using HDPE pellets along with 3% ultrafine copper (to increase specific gravity), 5 % ultrafine cuprous oxide (antifouling additive) and 1% Molybdenum Disulphide (foul release additive). The modified HDPE yarn was used in the WARP direction and 1000 denier polyester multifilament yarn was used in the weft direction for weaving. The fabric was fabricated using plain weave with 38 ends per inch and 38 picks per inch.

### Example 3

1000 denier polyester multifilament yarn was used in the WARP direction and 500 denier high density polyethylene (HDPE) monofilament yarn was used in the WEFT direction for weaving. The fabric was fabricated using ripstop weave with 38 ends per inch and 38 picks per inch.

### Example 4

Modified 500 denier high density polyethylene (HDPE) monofilament yarn was extruded using HDPE pellets along with 3% ultrafine tungsten and 3% ultrafine copper powder to increase the specific gravity of the yarn. The modified HDPE yarn was used in the WARP direction and 1000 denier polyester multifilament yarn was used in the WEFT direction for weaving. The fabric was fabricated using plain weave with 46 ends per inch and 46 picks per inch.

### Example 5

500 denier high density polyethylene (HDPE) monofilament yarn (hydrophobic) and 1000 denier polyester multifilament yarn (hydrophilic) were used to fabricate the fabric. HDPE yarn having tenacity 8.5 grams per denier was used in the WEFT direction and polyester yarn with tenacity 8.5 grams per denier was used in the WARP direction for weaving. The fabric was fabricated using ripstop weave with 60 ends per inch and 26 picks per inch.

### Example 6

Modified 500 denier high density polyethylene (HDPE) monofilament yarn was extruded using HDPE pellets along with 5% ultrafine copper powder to increase the specific gravity of the yarn. The modified HDPE yarn was used in the WARP direction and 1000 denier polyester multifilament yarn was used in the WEFT direction for weaving. The fabric was fabricated using plain weave with 36 ends per inch and 36 picks per inch. This fabric is 240 grams per square meter. This fabric was then tested for water permeability. The fabric was placed on the mouth of a plastic bucket and secured using an elastic band. 0.5, 1, and 2 litres was poured on top of the fabric and the time taken for the water to pass through the fabric was recorded. The same experiment was repeated for the regular 290 grams per square meter polyester which is used for the same application in aquaculture farms. **Table 1** shows the results of the water permeability gravitational test. It takes only 6 seconds for 1 litre of water to pass through the fabric described in this invention however it can take 7-8 minutes for 1 litre of water to pass through the regular 290 GSM polyester fabric. The same water permeability experiment was also conducted using 205 GSM. As shown in the table, the fabric described in this invention shows higher water permeability even when compared with lower GSM (205 GSM) Polyester fabric, which is used in the aquaculture industry to block ectoparasites, algae and jelly fish from entering into the cage.

### Example 7

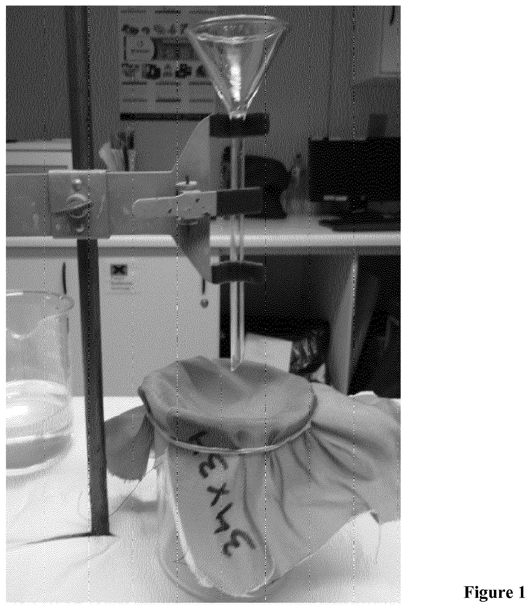

Modified 500 denier high density polyethylene (HDPE) monofilament yarn was extruded using HDPE pellets along with 5% ultrafine copper powder to increase the specific gravity of the yarn. The modified HDPE yarn was used in the WARP direction and 1000 denier polyester multifilament yarn was used in the WEFT direction for weaving. The fabric was fabricated using plain weave with 36 ends per inch and 36 picks per inch. This fabric was then tested for drag reduction of the fabric/water permeability. The fabric was placed on the mouth of a beaker and secured using an elastic band as shown in **Figure 1****.** Hundred live, newly hatched, Nauplii of *Caligus Rogercresseyi* were taken in 250 ml of filtered seawater. The seawater containing the live Nauplii was poured onto the fabric. All of the water passed through the fabric but the Nauplii remained on the fabric.

**Table 1**

| **Water Quantity (Lit)** | **290 GSM Polyester Fabric** | **205 GSM Polyester Fabric** | **Mismatched denier yarn Fabric** |
|---|---|---|---|
| | Time taken in Sec to pass water | | |
| 0.5 | 236 Sec (3.56 Min) | 62 Sec (1.02 Min) | 3 Sec |
| 1 | 478 Sec (7.58 Min) | 69 Sec (1.09 Min) | 6 Sec |
| 2 | 950 Sec (15.50 Min) | 90 sec (1.30 Min) | 12 Sec |

### Example 8

500 denier high density polyethylene (HDPE) monofilament yarn (hydrophobic) and 1000 denier polyester multifilament yarn (hydrophilic) were used to fabricate the fabric. HDPE yarn having tenacity 7.5 grams per denier was used in the WEFT direction and polyester yarn with tenacity 8 grams per denier was used in the WARP direction for weaving. The fabric was fabricated using twill weave (2/2) with 38 ends per inch and 38 picks per inch.

## Claims

1. A strong, lightweight, flexible fabric for reducing drag, wherein, the said fabric comprises a coated or uncoated woven fabric having Mismatch of deniers of the WARP and WEFT yarns, wherein the fabric optionally includes at least one of:
a) An antifouling additive incorporated in the yarns during extrusion;
b) A foul release additive incorporated in the yarns during extrusion; and
c) An additive to increase specific gravity of the yarns.

2. The fabric according to claim 1, wherein, the fabric comprises a) Monofilament yarns in the WARP direction and multifilament yarn in the WEFT direction or vice-a-versa; or b) Monofilament yarns in the WARP direction and monofilament yarn in the WEFT direction; or c) Multifilament yarns in the WARP direction and multifilament yarn in the WEFT direction.

3. The fabric according to claim 1, wherein the difference in denier between the WARP and WEFT yarns is at least more than 20.

4. The fabric according to claim 1, wherein, the fabric is woven about greater than 15 ends per inch (EPI, WARP yarns) and greater than 15 picks per inch (PPI, WEFT yarn).

5. The fabric according to claim 1, wherein, the antifouling additive is selected from the group consisting of ultrafine copper, copper nickel, cuprous oxide, cupric oxide, zinc oxide, boron powders, copper pyrithione, zinc pyrithione, triphenylborane-pyridine, and/or any compound that inhibits the growth of biofouling species.

6. The fabric according to claim 1, wherein, the foul release additive is selected from the group consisting of ultrafine molybdenum disulphide, graphite, and/or any compound that reduces the coefficient of friction of the yarn.

7. The fabric according to claim 1, wherein, the additive to increase specific gravity of the yarns is selected from the group consisting of calcium carbonate, barium sulfate, lead, tungsten, and/or any compound that has a specific gravity more than 1 gm/cm³.

8. The fabric according to claims 1, 5 and 6, wherein, the fabric can be woven using 0-100% of the yarns that have an antifouling additive and/or foul release and/or specific gravity increasing additive incorporated in the yarn.

9. The fabric according to claim 1, wherein, the multifilament yarn is selected from the group consisting of polyester, nylon, polypropylene, or mix of any hydrophilic and hydrophobic yarns.

10. The fabric according to claim 1, wherein, the monofilament yarn is selected from the group consisting of high density polyethylene, ultra-high molecular weight polyethylene, polypropylene, polyester, nylon, or mix of any hydrophilic and hydrophobic yarns.

11. The fabric according to claim 6, wherein, the multifilament yarn can be twisted using two-for-one method with a twist of greater than 30 twists per meter.

12. The fabric according to claim 1, wherein the said fabric is woven using plain weave, twill weave, ripstop weave or any other weave.

13. The fabric according to claims 1 and 12, wherein the fabric is woven using twill weave.

14. The fabric according to claim 1, wherein the fabric can be installed around a single aquaculture cage or a full farm site for blocking harmful pests, parasites, insects, organisms, and animals from entering into the cage/farm.

15. The fabric according to claim 1, wherein the fabric can be used as a filter bag to filter out ectoparasites and other harmful pests, insects, organisms and jelly fish in delousing applications at salmon farms.
